# EUROPEAN PATENT SPECIFICATION

(11) **EP 3 850 223 B1**
(45) Date of publication and mention of the grant of the patent: **21.05.2025**
(21) Application number: 19860688.1
(22) Date of filing: 14.09.2019
(51) Int. Cl.: F15B 11/00, F15B 13/044, F15B 11/10, A01C 5/06, A01C 7/20

(54) **FLUID CONTROL ASSEMBLY AND SYSTEM**
FLUIDSTEUERUNGSANORDNUNG UND SYSTEM
ENSEMBLE ET SYSTÈME DE RÉGULATION DE FLUIDE

(30) Priority: 14.09.2018 US 201862731813 P; 11.01.2019 US 201962791203 P; 02.03.2019 WO PCT/US2019/020452; 29.04.2019 US 201962840372 P
(43) Date of publication of application: 21.07.2021
(73) Proprietor: Precision Planting LLC, Tremont, IL 61568 (US)
(72) Inventor: HERRMANN, Tristan, Princeville, IL 61559 (US); STOLLER, Jason, Eureka, IL 61530 (US); SCHLIPF, Ben, Tremont, IL 61568 (US)
(74) Representative: AGCO Intellectual Property Department
(86) International application number: PCT/US2019/051204
(87) International publication number: WO 2020/056395

(56) References cited:
- WO-A1-2004/097227
- WO-A1-2004/097227
- WO-A1-2007/110488
- WO-A1-2019/072930
- DE-A1- 102014 217 181
- DE-B4- 10 315 460
- DE-B4- 10 315 460
- US-A1- 2004 055 455
- US-A1- 2004 261 608
- US-A1- 2004 261 608
- US-A1- 2007 130 935
- US-A1- 2014 158 215
- US-A1- 2017 215 334
- US-A1- 2018 000 001

## Description

The invention is about a fluid system for controlling an agricultural operation.

### BACKGROUND

DE 10 2014 217181 A1 discloses a pressure control circuit with at least one switching valve for controlling a consumer pressure. The switching valve has a valve member that is ballistically actuatable. A duration of the switch-on time of the switching valve or a duration of the ballistic actuation depends on a pressure specification.

US 2007/130935 A1 discloses an integrated valve assembly and computer controller for a distributed hydraulic control system.

US 2004/261608 A1 discloses a position control system for controlling a fluid operated cylinder having a fluid chamber defined by a piston located within a housing for movement between first and second end limits of travel, the system including two electrically actuated proportional flow control valves connected to each port of the cylinder for selectively and proportionally controlling fluid flow into and out of the chamber.

US 2014/158215 A1 discloses a valve device including a valve housing which bounds a valve chamber in which a valve member is accommodated for movement between a blocking position and a release position in order to influence a free flow cross-section for a fluid in a flow path between an inlet passage terminating into the valve chamber and an outlet passage leading from the valve chamber, further including a first absolute pressure sensor for providing a first pressure signal as a function of an operating pressure in the flow path, and further including an evaluation circuit for processing the first pressure signal.

WO 2019/072930 A1 discloses a configurable valve for distributing a fluid, the valve comprising a housing and a plurality of orifices for the inflow or the outflow of the fluid inside the housing. The valve additionally comprises a plurality of distributors arranged in the housing so as to control the flow of the fluid inside the valve, and the valve comprises an electronic card arranged in the housing, the electronic card being configured so as to store a truth table associating a predetermined position of the distributors with each control signal received by the valve. The electronic card is furthermore configured so as to manage a transition mode of the distributors from one position to another.

DE 103 15 460 B4 discloses a valve arrangement for gas and liquids that has at least two combined 2/2-way valves forming a multi-path valve unit. An electric control unit with at least one bus-connection and at least one sensor connection is assigned to the 2/2-way valves.

WO 2004/097227 A1 discloses a fluid flow control valve island comprising a plurality of sets of four bistable 2/2 control valves, a programmable controller which processes control signals from an external programmable logic controller, and a memory element. The controller is preprogrammed with a program identifying the respective predetermined valve type to be simulated by each set of 2/2 valves. The controller generates respective outputs to each of the four valves in a set so as to actuate one or more of those four valves and thus switch that set from one mode of the predetermined valve type simulated to its other, or another, mode.

US 2004/055455 A1 discloses an apparatus for controlling bounce of hydraulically powered equipment, in which a sensor detects when a cylinder chamber pressure increases above a given magnitude and then a determination is made when the rate of change of the pressure is less than a defined threshold, upon which a control valve is opened to relieve the pressure in the cylinder chamber.

US 2017/215334 A1 discloses an opener attachment for an agricultural row unit including a frame, an arm pivotally coupled to the frame, an opener disc coupled to the arm and configured to excavate a trench into soil, and a gauge wheel coupled to the arm and configured to block movement of the opener disc into the soil to control a depth of the trench. The opener attachment also includes a mechanical stop coupled to the frame and configured to block the gauge wheel and the opener disc moving toward the soil. In addition, the opener attachment includes an air bag configured to urge the gauge wheel and the opener disc toward the soil.

### SUMMARY OF INVENTION

According to the present invention there is provided a fluid system for controlling an agricultural operation, as defined by the features of appended independent claim 1. Preferred embodiments of the present invention are defined by the appended dependent claims.

### BRIEF DESCRIPTION OF THE DRAWINGS

FIG. 1 is a top perspective view of a fluid control assembly.
FIG. 2 is an exploded bottom perspective view of the fluid control assembly of FIG. 1.
FIG. 3 is an exploded top perspective view of the fluid control assembly of FIG. 1.
FIG. 4 is an exploded bottom perspective view of the fluid control assembly of FIG. 1 showing the underside of the fluid control assembly housing.
FIG. 5 is an enlarged view of a valve for the fluid control assembly of FIG. 1.
FIGs. 6A and 6B schematically illustrate an example of the operation of a fluid system not covered by the present invention, in which the fluid control assembly of FIG. 1 controls a fluid cylinder to increase downforce and upforce, respectively.
FIGs. 7A and 7B schematically illustrate the operation of a fluid system in which the fluid control assembly of FIG. 1 controls an airbag to increase and decrease downforce, respectively.
FIGs. 8A and 8B schematically illustrate another example of the operation of a fluid system not covered by the present invention, in which the fluid control assembly of FIG. 1 controls a pair of airbags to increase downforce and upforce, respectively.
FIG. 9 is a side elevation view of a row unit of an agricultural planter showing a row cleaner assembly, a downforce assembly and a closing wheel assembly, each of which may be operated by the fluid control assembly of FIG. 1.
FIG. 10 is a top perspective view of an example of another fluid control assembly not covered by the present invention.
FIG. 11 is an exploded perspective view of the example not covered by the present invention of the fluid control assembly of FIG. 10.
FIG. 12 is a top plan view of the example not covered by the present invention of the fluid control assembly of FIG. 10 with the top cover removed.
FIG. 13 is a perspective view of the example not covered by the present invention with the circuit board for the fluid control assembly of FIG. 10 with the valves removed.
FIG. 14 is a bottom perspective view of the example not covered by the present invention of the top cover of the fluid control assembly of FIG. 10.
FIG. 15 is an elevation view of the example not covered by the present invention with a cross-section of the top cover of the fluid control assembly of FIG. 10.
FIG. 16 is a perspective view of the example not covered by the present invention with the cross-section of the top cover of the fluid control assembly of FIG. 10.
FIGs. 17A and 17B schematically illustrate a further example of the operation of a fluid system not covered by the present invention, in which the fluid control assembly not covered by the present invention, of FIG. 10 controls an airbag to increase and decrease downforce, respectively.

### DESCRIPTION

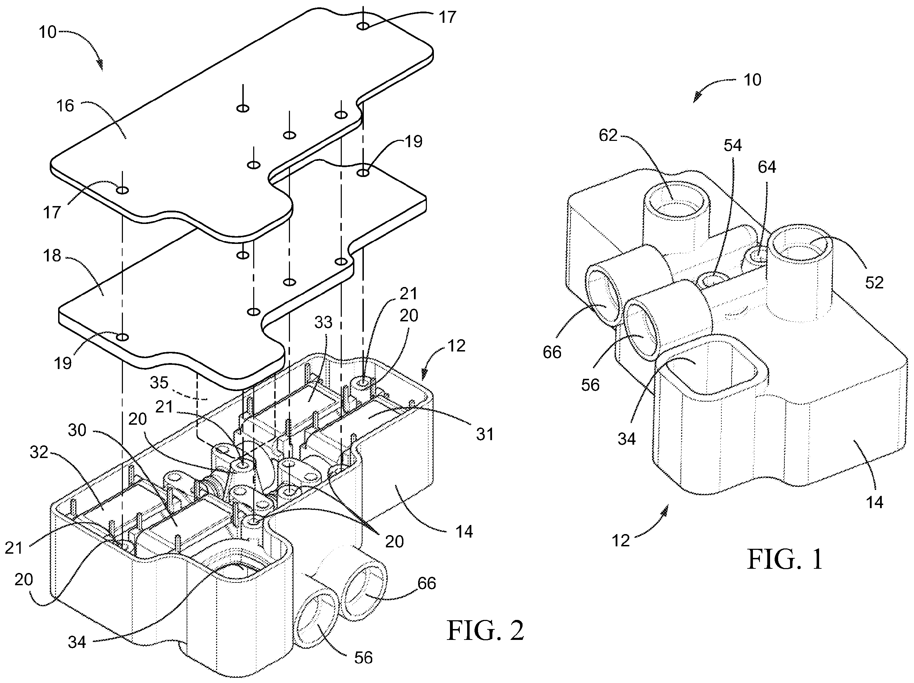

Referring now to the drawings, wherein like reference numerals designate identical or corresponding parts throughout the several views, FIG. 1 shows a top perspective view of a fluid control assembly 10, for which exemplary uses are described later. FIG. 2 shows an exploded bottom perspective view of the fluid control assembly 10 of FIG. 1. The term "fluid" as used herein is intended to encompass any type of gas, including, but not limited to, air, nitrogen, and carbon dioxide. Accordingly, although the term "air" may be identified in some of the drawings referred to herein in connection with descriptions of the exemplary embodiments, systems and uses disclosed, it should be understood that the fluid control assembly 10 and the systems and uses disclosed herein may be used with any fluid as defined above.

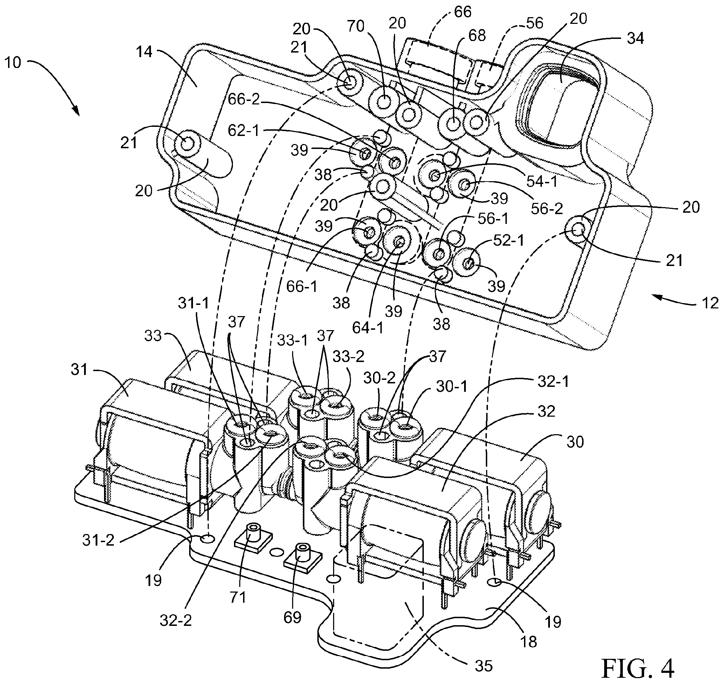

The fluid control assembly 10 includes a housing 12 which comprises a top cover 14 and a bottom plate 16. A plurality of valves 30, 31, 32, 33 (FIGs. 2-4) are mounted to a circuit board 18 received within the top cover 14. As best viewed in FIG. 4, the bottom plate 16 and circuit board 18 include aligned apertures 17, 19 which further align with apertures 21 within posts 20 extending downward from the underside of the top cover 12. Threaded connectors (not shown) extend through the apertures 17, 19 and into aperture 21 to secure the bottom plate 16 and circuit board 18 to the top cover 14 thereby enclosing the circuit board 18 and valves 30, 31, 32, 33 within the housing 12.

The top cover 14 includes a communication port 34 for providing data/signal connection with the circuit board 18. The communication port 34 may receive a connector 35 on the circuit board 18 for mating with a mating connector (not shown) for signal communication with a remote controller 110 (discussed later). The communication port 34 may be for a 6-pin DT connector, Controller Area Network (CAN) bus connector, USB, Ethernet, RS-232 or any other type of data/signal connector.

The top cover 14 also includes first and second fluid inlet ports 52, 62, first and second exhaust ports 54, 64 and first and second fluid outlet ports 56, 66. As best viewed in FIG. 4, the top cover 14 also includes a down pressure sensor tube 68 in communication with the first fluid outlet port 56 and a lift pressure sensor tube 70 in communication with the second fluid outlet port 66. The down pressure sensor tube 68 aligns with and provides communication with a down pressure sensor 69 disposed on the circuit board 18 to detect fluid pressure within the first fluid outlet port 56, for purposes discussed later. Similarly, the lift pressure sensor tube 70 aligns with and provides communication with a lift pressure sensor 71 disposed on the circuit board 18 to detect pressure within the second fluid outlet port 66, for purposes discussed later.

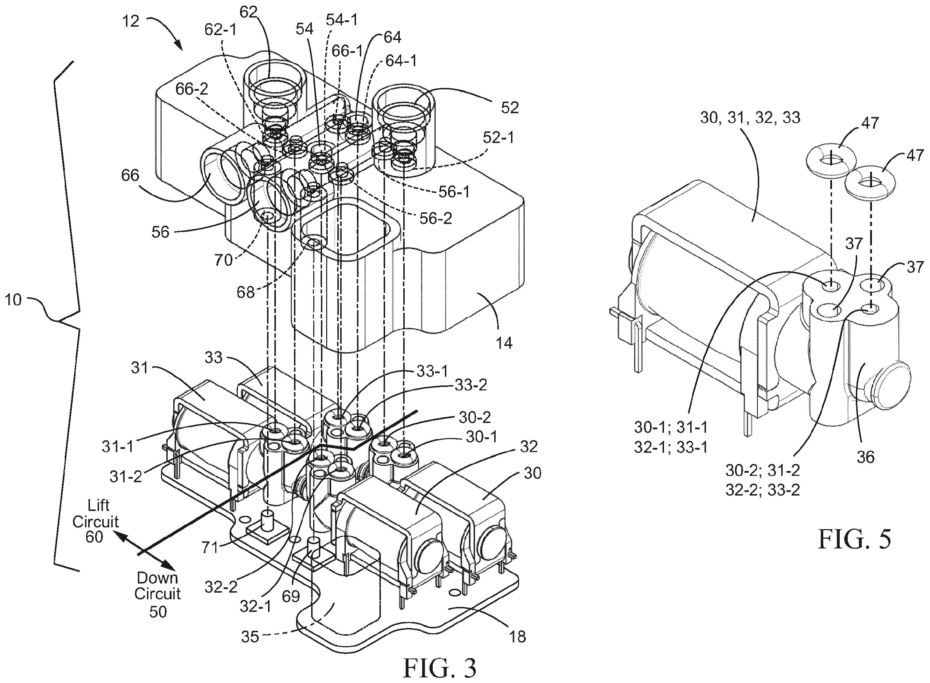

Referring to FIG. 5, each of the valves 30, 31, 32, 33 includes a fixture 36 at one end having a pair of longitudinally aligned valve passages (designated by reference "X-1" or "X-2" where "X" is a variable corresponds to each of the respective valves 30, 31, 32, 33). The valves 30, 31, 32, 33 may be 2-way pneumatic valves from Asco Valve, Inc., 160 Park Avenue, Florham Park, NJ, 07932 which are in the normally closed position (i.e., so fluid cannot pass between the passages X-1, X-2 of the valve) until energized or actuated, causing the valve to open (i.e., so that fluid may pass between passages X-1, X-2 of the valve). The upper end of the fixture 36 also includes alignment holes 37 for alignment with the pegs 38 (FIG. 4) on the underside of the top cover 14 to ensure proper alignment of the valve passages X-1, X-2 with the corresponding openings of each of the ports 52, 54, 56, 62, 64, 66 in the top cover 14. A gasket 47 is disposed over the valve passages X-1, X-2 and seats within the recesses 39 (FIG. 4) in the underside of the top cover 14 surrounding each opening associated with each of the ports 52, 54, 56, 62, 64, 66 thereby providing an airtight seal between the valve passages and the aligned port openings.

Referring to FIG. 3, the fluid control assembly 10 is divided into a down circuit 50 and a lift circuit 60.

### Down Circuit

The down circuit 50 comprises the first fluid inlet port 52, the first exhaust port 54, the first fluid outlet port 56, a first fluid supply valve 30, a first fluid exhaust valve 32, the down pressure sensor tube 68, and the down pressure sensor 69.

Referring to FIGs. 3 and 4, in the down circuit 50, the valve passage 30-1 of the first fluid supply valve 30 aligns with the opening 52-1 at the bottom of the first fluid inlet port 52. The other valve passage 30-2 of the first fluid supply valve 30 aligns with the first opening 56-1 of the first fluid outlet port 56. The valve passage 32-1 of the first fluid exhaust valve 32 aligns with the second opening 56-2 of the first fluid outlet port 56. The other valve passage 32-2 of the first fluid exhaust valve 32 aligns with the opening 54-1 of the first exhaust port 54.

### Lift Circuit

The lift circuit 60 comprises the second inlet port 62, the second exhaust port 64, the second outlet port 66 a second fluid supply valve 31, a second fluid exhaust valve 33, the lift pressure sensor tube 70, and the lift pressure sensor 71.

Referring to FIGs. 3 and 4, in the lift circuit 60, the valve passage 31-1 of the second fluid supply valve 31 aligns with the opening 62-1 at the bottom of the first fluid inlet port 62. The other valve passage 31-2 of the second fluid supply valve 31 aligns with the second opening 66-2 of the second fluid outlet port 66. The first valve passage 33-1 of the second fluid exhaust valve 33 has aligns with the first opening 66-1 of the second fluid outlet port 66. The other valve passage 33-2 of the second fluid exhaust valve 33 aligns with the opening 64-1 of the second exhaust port 64.

### Systems and Operation Overview

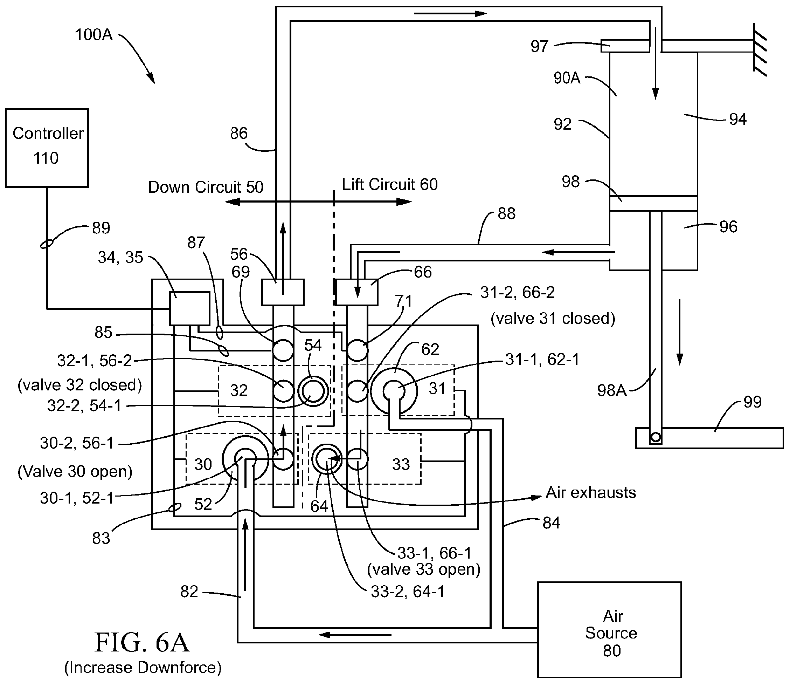

The operation of the fluid control assembly 10 is described in principle below and schematically illustrated in connection with different fluid system configurations as shown in the example not covered by the present invention of FIGs. 6A - 8B. In each of these configurations of the example not covered by the present invention, the fluid system comprises the fluid control assembly 10 in communication with a fluid source 80 and one or more pneumatic actuators 90 (90A, 90B). The fluid source 80 may be a fluid tank with a compressor or other suitable fluid source under pressure. The pneumatic actuator 90 (90A, 90B) in this example not covered by the present invention, may be a fluid cylinder or a fluid bag. The pneumatic actuator 90 (90A, 90B) is schematically illustrated as having one end supported by a fixed or non-movable bracket, arm or frame member 97 with the other end connected to a movable bracket or arm 99 that moves or pivots in response to a downforce or upforce applied by the pneumatic actuator 90 (90A, 90B). The circuit board 18 includes an electrical trace or signal path 83 between the communication port 34/connector 35 and each of the valves 30, 31, 32, 33 for signal communication therebetween. The circuit board 18 also includes electrical traces 85, 87 between the communication port 34/connector 35 and the respective down pressure sensor 69 and lift pressure sensor 71 for signal communication therebetween. In some embodiments, all processing of signals for control of the valves 30, 31, 32, 33 may be performed by a processor on the circuit board 18. In other embodiments, a data/signal line 89 may connect a remote controller 110 to the communication port 34/connector 35 for signal communication of the remote controller 110 with the pressure sensors 69, 71 and valves 30, 31, 32, 33. In yet another alternative embodiment, a closed loop control may be used to control the pressure in the down circuit 50 and lift circuit 60 to selected values set by an operator. In such an embodiment, the selected value may be a selected amount of pressure in the outlet ports 56, 66, or the selected value may be a predetermined position of the movable member 99 detected by a position sensor (not shown) disposed detect the position of the movable member 99.

Referring the example not covered by the present invention of FIGs. 6A-6B a system 100A is shown in which the inlet port 52 of the down circuit 50 of the fluid control assembly 10 is in communication with a fluid source 80 via down circuit supply line 82. The inlet port 62 of lift circuit 60 is in communication with the fluid source 80 by a lift circuit supply line 84. A down circuit actuator line 86 is connected between the down circuit outlet port 56 and a down chamber 94 of a pneumatic actuator 90A. A lift circuit actuator line 88 is connected between the lift circuit outlet port 66 and a lift chamber 96 of the pneumatic actuator 90A. The pneumatic actuator 90A comprises a fluid cylinder having a barrel 92 with an internal piston 98 from which extends a piston rod 98A. The area of the barrel 92 above the piston 98 defines the down chamber 94. The area of the barrel below the piston 98 defines the lift chamber 96. The piston rod 98A is pivotally connected to the movable arm 99.

In operation, referring to the example not covered by the present invention of FIG. 6A, if the down pressure sensor 69 detects that the pressure in the down circuit actuator line 86 is below a predetermined or selected pressure, a signal is generated to open the first fluid supply valve 30 (as previously discussed all valves 30, 31, 32, 33 are normally in the closed position). With the first fluid supply valve 30 open, the pressurized fluid from the fluid source 80 passes through the supply line 82, and into inlet port opening 52-1, then the first and second valve passages 30-1, 30-2 and then into opening 56-2, then out through the down circuit outlet port 56 and through the down circuit actuator line 86 into the down chamber 94 which forces the piston 98 and movable arm 99 downwardly. As the piston 98 moves downwardly, the pressure in the lift circuit actuator line 88 increases. When the lift pressure sensor 71 detects that the pressure in the lift circuit actuator line 88 exceeds a predetermined or set pressure, a signal is generated to open the second exhaust valve 33 permitting fluid to exhaust from the lift chamber 96 through the lift circuit actuator line 88 and lift circuit outlet port 66, then through passages 33-1, 33-2 of the second exhaust valve 33 and the exhaust port opening 64-1 before venting to atmosphere. When the down pressure sensor 69 detects that the pressure in the down circuit actuator line 86 reaches the predetermined or set pressure, a signal is generated to close the previously opened valves 30, 33.

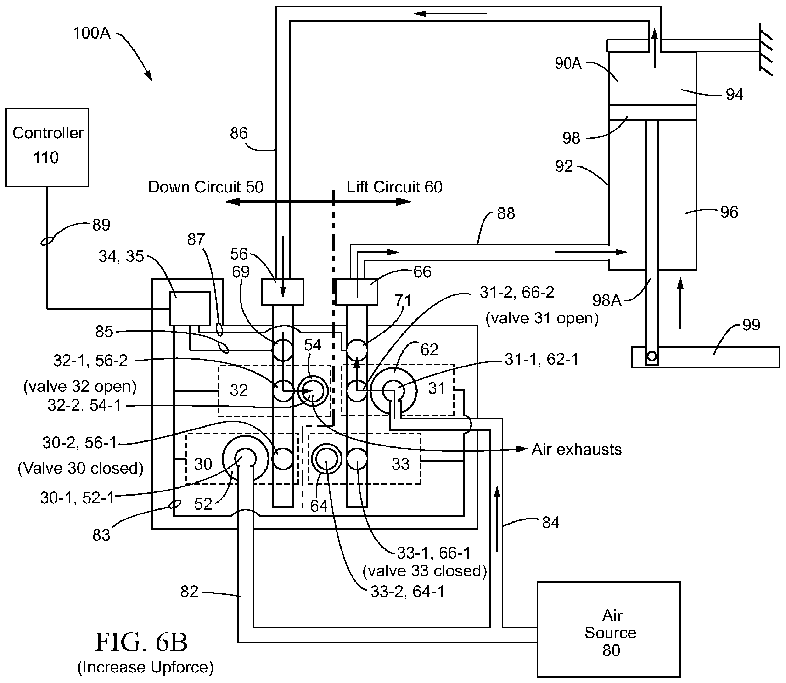

As shown in the example not covered by the present invention of FIG. 6B, if the lift pressure sensor 71 detects that the pressure in the lift circuit actuator line 88 is below a predetermined or selected pressure, a signal is generated to open the second fluid supply valve 31 from its normally closed position. With the second fluid supply valve 31 open, the pressurized fluid from the fluid source 80 passes through the second supply line 84, and into inlet port opening 62-1, then the first and second valve passages 31-1, 31-2 and then into opening 66-2, then out through the lift circuit outlet port 66 and through the lift circuit actuator line 88 into the lift chamber 96 which forces the piston 98 and movable arm 99 upwardly. As the piston 98 moves upwardly, the pressure in the down circuit actuator line 86 increases. When the down pressure sensor 69 detects that the pressure in the down circuit actuator line 86 exceeds a predetermined or set pressure, a signal is generated to open the first exhaust valve 32 permitting fluid to exhaust from the down chamber 94 through the down circuit actuator line 86 and down circuit outlet port 56, then through passages 32-1, 32-2 of the first exhaust valve 32 and the exhaust port opening 54-1 before venting to atmosphere. When the lift pressure sensor 71 detects that the pressure in the lift circuit actuator line 88 reaches the predetermined or set pressure, a signal is generated to close the previously opened valves 31, 32.

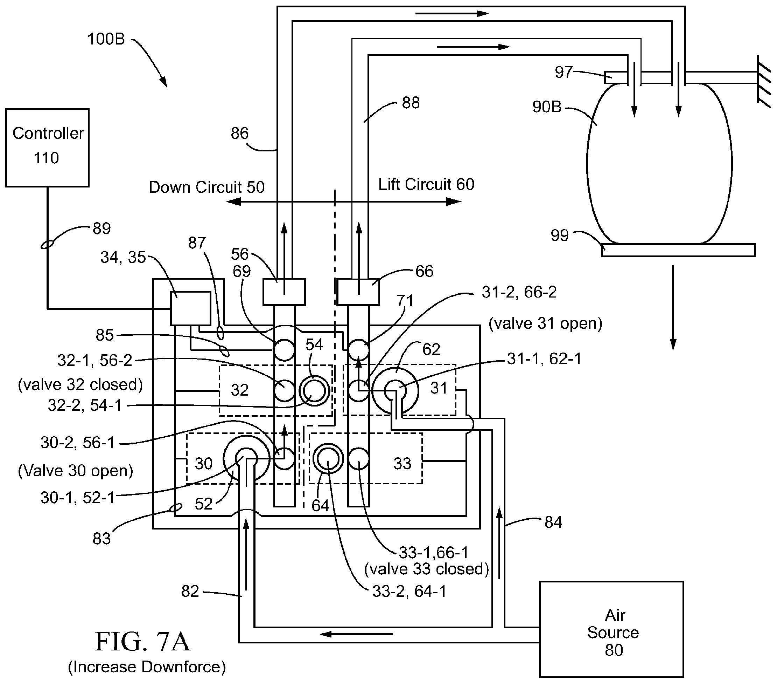

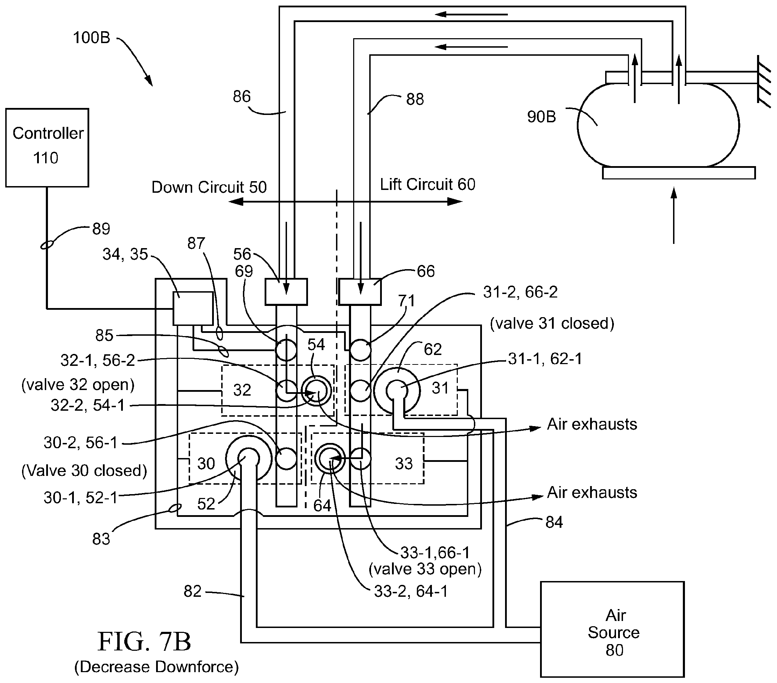

FIGs. 7A-7B schematically illustrate an embodiment of a fluid system 100B according to the present invention. The configuration of the system 100B is similar to that of system 100A in the example not covered by the present invention, except that the pneumatic actuator 90 (90A, 90B) is an airbag 90B, which has only a single chamber. One end of the airbag 90B is mounted to the fixed or stationary bracket 97. The other end of the airbag 90B is secured to the movable arm 99. Comparing FIGs. 7A and 7B, it can be seen that when the fluid bag is expanded (FIG. 7A) the expansion of the airbag forces the movable arm downwardly. When the airbag collapses or compresses (FIG. 7B), the movable arm 99 moves upwardly.

In operation, referring to FIG. 7A, if the down pressure sensor 69 detects that the pressure in the down circuit out line 86 is below a predetermined or selected pressure, a signal is generated to open the first and second fluid supply valves 30, 31. With the first and second fluid supply valves 30, 31 open, the pressurized fluid from the fluid source 80 passes through the respective supply lines 82, 84 and into the respective inlet port openings 52-1, 62-1 and the respective first and second valve passages 30-1, 30-2, 31-1, 31-2 and then into the respective openings 56-2, 66-2 then out through the down circuit and lift circuit outlet ports 56, 66 and through the respective actuator line 86, 88 into the fluid bag 90B, causing the airbag 90B to expand forcing movable arm 99 downwardly. When the down pressure sensor and lift pressure sensor 71 detect that the pressure in the respective lines 86, 88 exceeds a predetermined or set pressure, a signal is generated to close both supply valves 30, 31.

As shown in FIG. 7B, if the down pressure sensor 69 detects that the down pressure in the down circuit actuator line 86 exceeds a further predetermined or selected pressure, a signal is generated to open the first and second exhaust valves 32, 33 from their normally closed position. With the first and second exhaust valves 32, 33 open, permitting fluid to exhaust from the airbag through the respective actuator lines 86, 88 and outlet ports 56, 66, then through passages 32-1, 32-2, 33-1, 33-2 of the first and second exhaust valves 32, 33 and the respective exhaust port openings 54-1, 64-1 before venting to atmosphere. When the down pressure sensor 69 detects that the pressure in the down circuit actuator line 86 reaches the further predetermined or set pressure, a signal is generated to close both exhaust valves 32, 33.

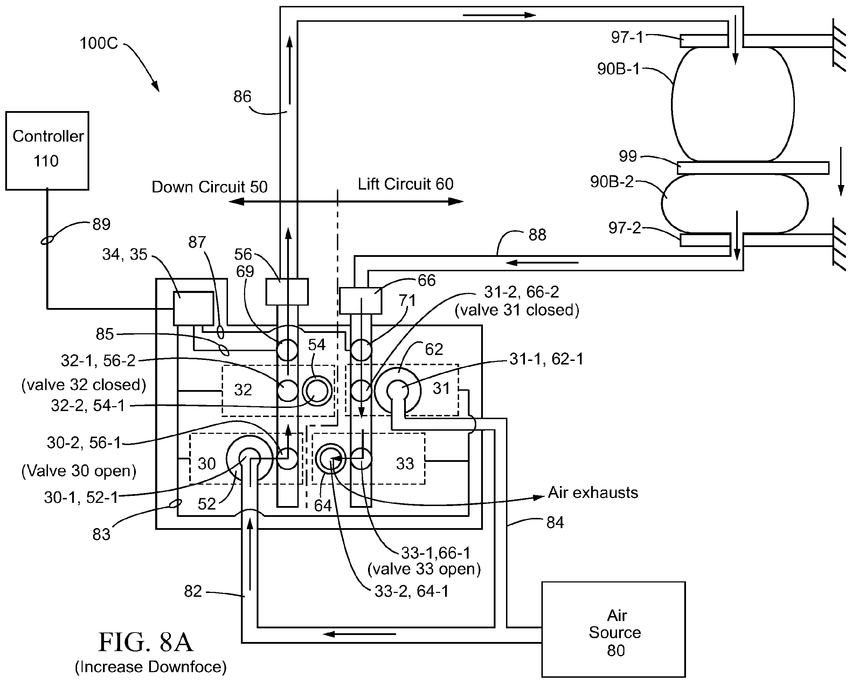

The example not covered by the present invention of FIGs. 8A-8B schematically illustrates another fluid system 100C. Two airbags 90B-1, 90B-2 are stacked with the movable arm 99 disposed between the airbags 90B-1, 90B-2 and the other end of both airbags secured to a fixed or non-moving brackets 97-1, 97-2. In effect, the two stacked airbags 90B-1, 90B-2 with the movable arm 99 between them operate and function substantially the same as the down chamber and lift chambers of the system 100A of the example not covered by the present invention.

Accordingly, in operation, referring to the example not covered by the present invention of FIG. 8A, if the down pressure sensor 69 detects that the pressure in the down circuit actuator line 86 is below a predetermined or selected pressure, a signal is generated to open the first fluid supply valve 30. With the first fluid supply valve 30 open, the pressurized fluid from the fluid source 80 passes through the supply line 82, and into inlet port opening 52-1, then the first and second valve passages 30-1, 30-2 and then into opening 56-2, then out through the down circuit outlet port 56 and through the down circuit actuator line 86 into the upper airbag 90B-1 which causes the upper airbag 90B-1 to expand and causes the lower airbag 90B-2 to collapse, forcing the movable arm 99 downwardly. As the lower airbag 90B-2 collapses, the pressure in the lift circuit actuator line 88 increases. When the lift pressure sensor 71 detects that the pressure in the lift circuit actuator line 88 exceeds a predetermined or set pressure, a signal is generated to open the second exhaust valve 33 permitting fluid to exhaust from the lower airbag 90B-2 through the lift circuit actuator line 88 and lift circuit outlet port 66, then through passages 33-1, 33-2 of the second exhaust valve 33 and the second exhaust port opening 64-1 before venting to atmosphere. When the down pressure sensor 69 detects that the pressure in the down circuit actuator line 86 reaches the predetermined or set pressure, a signal is generated to close the previously opened valves 30, 33.

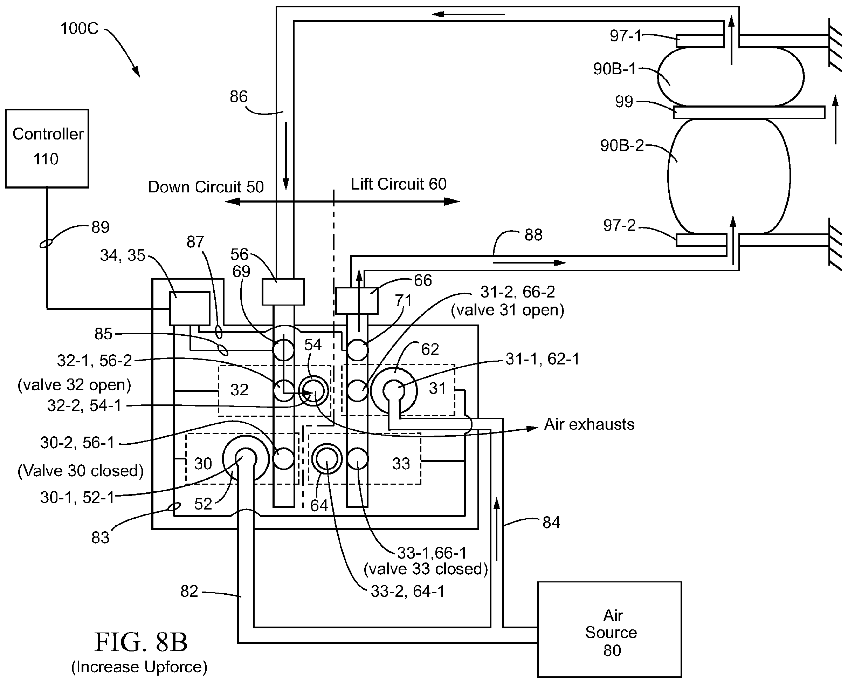

As shown in the example not covered by the present invention of FIG. 8B, if the lift pressure sensor 71 detects that the pressure in the lift circuit actuator line 88 is below a predetermined or selected pressure, a signal is generated to open the second fluid supply valve 31 from its normally closed position. With the second fluid supply valve 31 open, the pressurized fluid from the fluid source 80 passes through the second supply line 84, and into inlet port opening 62-1, then the first and second valve passages 31-1, 31-2 and then into opening 66-2, then out through the lift circuit outlet port 66 and through the lift circuit actuator line 88 into the lower airbag 90B-2 which causes the lower airbag 90B-2 to expand and causes the upper airbag 90B-1 to collapse, forcing the movable arm 99 upwardly. As the upper airbag 90B-1 collapses, the pressure in the down circuit actuator line 86 increases. When the down pressure sensor 69 detects that the pressure in the down circuit actuator line 86 exceeds a predetermined or set pressure, a signal is generated to open the first exhaust valve 32 permitting fluid to exhaust from the upper airbag 90B-1 through the down circuit actuator line 86 and down circuit outlet port 56, then through passages 32-1, 32-2 of the first exhaust valve 32 and the first exhaust port opening 54-1 before venting to atmosphere. When the lift pressure sensor 71 detects that the pressure in the lift circuit actuator line 88 reaches the predetermined or set pressure, a signal is generated to close the previously opened valves 31, 32.

### Exemplary Uses

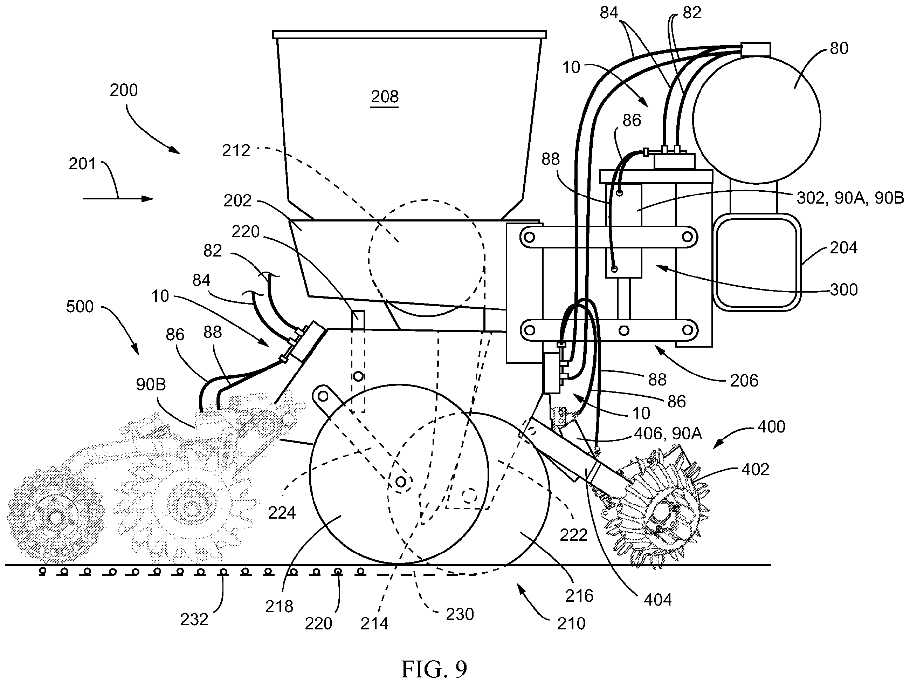

FIG. 9 is a side view of a row unit 200 of an agricultural planter which moves in a direction of travel indicated by arrow 201. The row unit 200 includes a row unit frame 202 supported from a transverse toolbar 204 by a parallel linkage 206 which permits the row unit frame 202 to move vertically independently of the toolbar 204. The row unit frame 202 supports a seed hopper 208, a seed trench opening assembly 210, a seed meter 212 and a seed tube or seed conveyor 214. As is conventional, the seed trench opening assembly 210 comprises opening disks 216, gauge wheels 218 and a depth adjustment mechanism 220. The opening disks 216 are rotatably supported on a downwardly extending shank 222 of the row unit frame 202. The gauge wheels 218 are pivotally supported from the row unit frame 202 by gauge wheel arms 224. In operation, as the row unit 200 travels in the forward direction of travel, the opening disks 216 form a seed trench 230 in the soil. The seed meter 212 discharges seeds 232 which are deposited in the open seed trench 220 by the seed tube or conveyor 214.

The row unit 200 may include a supplement downforce assembly 300, a row cleaner 400 and a trench closing assembly 500. The supplement downforce assembly 300, the row cleaner 400 and the trench closing assembly 500, may be referred to generally as an "agricultural tool".

The supplemental downforce assembly 300 may be the AirForce system available from Precision Planting LLC, 23207 Townline Rd, Tremont, IL 61568, which includes a pneumatic actuator 302 rigidly supported at its upper end by a bracket secured to the toolbar. The other end of the actuator is connected to one of the linkages of the parallel linkage 206. The supplemental downforce assembly 300 may incorporate the fluid control assembly 10 and utilize the fluid system 100A of the example not covered by the present invention, described above, wherein the pneumatic actuator 90A of system 100A corresponds to the actuator 302 and the parallel linkage 206 corresponds to the movable member 99 of system 100A, with fluid supply lines 82, 84 communicating fluid from the fluid tank 80 supported on the toolbar 204 to the respective down chamber and up chamber of the actuator 302 as described in connection with system 100 A of the example not covered by the present invention. Alternatively, the supplemental downforce assembly 300 may utilize the fluid system 100B described above, wherein the actuator 302 corresponds to the airbag 90B of system 100B and the parallel linkage 206 corresponds to the movable member 99. Alternatively, the supplemental downforce assembly 300 may utilize the fluid system 100C of the example not covered by the present invention described above, wherein the actuator 302 may be replaced by the two airbags 90B-1 and 90B-2 of system 100C and the parallel linkage 206 corresponds to the movable member 99.

The row cleaner 400 includes a pair of rotating wheels 402 supported by forwardly extending arms 404 pivotally connected to the row unit frame 202. An actuator 406 is supported at one end from the row unit frame 202 and is connected at its other end to the arms 404. In operation, the wheels 402 are caused to rotate by engagement with the soil and move debris to either side leaving the soil clear of debris in front of the furrow opening discs 216. The actuator 406 adjusts the downforce on the arm to vary how aggressive the wheels 402 engage with the soil. The row cleaner assembly 400 may be substantially the same as the row cleaner apparatus disclosed in U.S. Patent No. 9,752,596. The row cleaner 400 may incorporate the fluid control assembly 10 and utilize the fluid system 100A of the example not covered by the present invention described above, wherein the pneumatic actuator 90A of system 100A corresponds to the actuator identified by reference number "200" in U.S. Patent No. 9,752,596. A commercial embodiment of the row cleaner disclosed U.S. Patent No. 9,752,596 is marketed as the CleanSweep, available from Precision Planting LLC, 23207 Townline Rd, Tremont, IL 61568.

The trench closing assembly 500 may be any of the embodiments of the trench closing assembly disclosed in Applicant's co-pending International Patent Application No. PCT/US2019/020452. The trench closing assembly 500 may incorporate the fluid control assembly 10 and utilize the fluid system 100B according to the present invention as described above, wherein the pneumatic actuator 90B of system 100B corresponds to the actuator identified by reference number "259" in International Patent Application No. PCT/US2019/020452.

### Alternative Fluid Control System

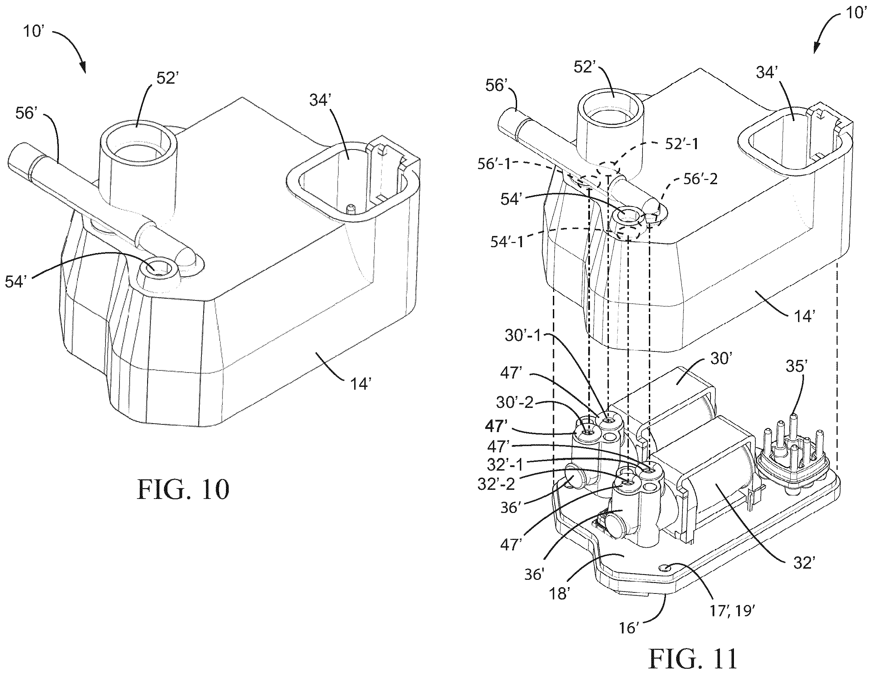

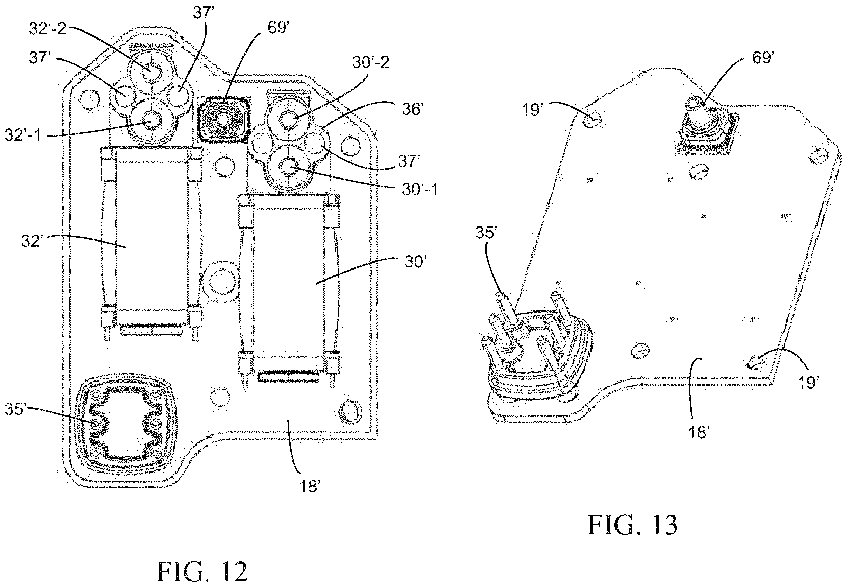

The example not covered by the present invention of FIGs. 10-16, illustrates another fluid control system 10' suitable for applications where it is down force control only is needed. Thus, only a down circuit 50' is provided.

Similar to the fluid control assembly 10 described above, the fluid control assembly 10' of the example not covered by the present invention, includes a housing 12' which comprises a top cover 14' and a bottom plate 16'. A plurality of valves 30', 32' (see the example not covered by the present invention of FIGs. 11-12) are mounted to a circuit board 18' received within the top cover 14'. The bottom plate 16' and circuit board 18' include aligned apertures 17', 19' which further align with apertures 21' within posts 20' extending downward from the underside of the top cover 12'. Threaded connectors (not shown) extend through the apertures 17', 19' and into aperture 21' to secure the bottom plate 16' and circuit board 18' to the top cover 14' thereby enclosing the circuit board 18' and valves 30', 32' within the housing 12'.

The top cover 14' includes a communication port 34' for providing data/signal connection with the circuit board 18'. The communication port 34' may receive a connector 35' on the circuit board 18' for mating with a mating connector (not shown) for signal communication with the controller 110 as discussed above. The communication port 34' may be for a 6-pin DT connector, Controller Area Network (CAN) bus connector, USB, Ethernet, RS-232 or any other type of data/signal connector.

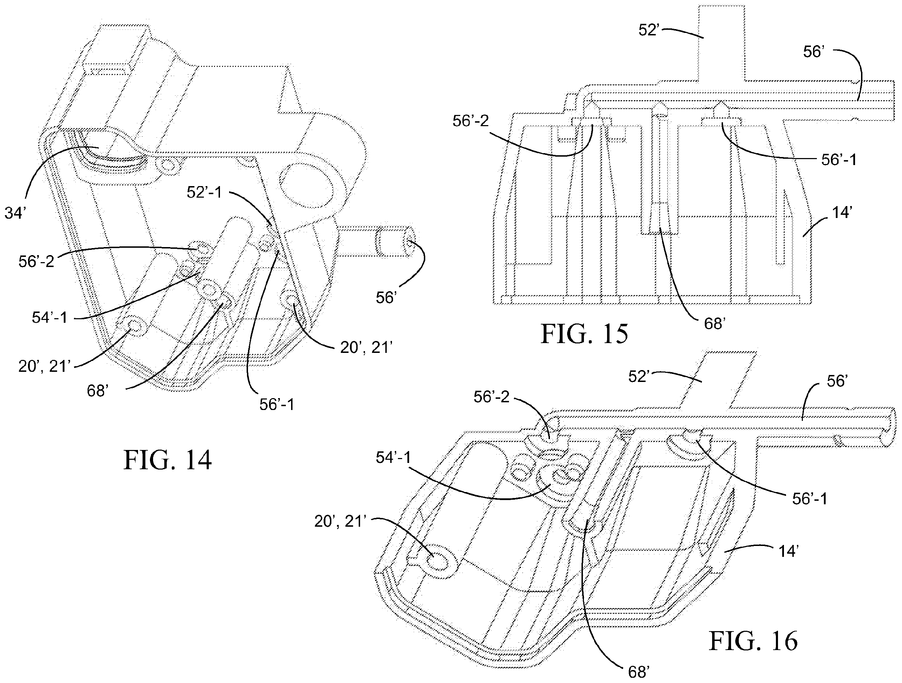

The top cover 14' also includes a fluid inlet port 52', an exhaust port 54' and an outlet port 56'. In this example not covered by the present invention, as best viewed in FIGs. 14 and 16, the top cover 14' also includes a down pressure sensor tube 68' in communication with the fluid outlet port 56'. The down pressure sensor tube 68' aligns with and provides communication with a down pressure sensor 69' disposed on the circuit board 18' to detect fluid pressure within the fluid outlet port 56'.

In the described example not covered by the present invention, referring to FIG. 11, each of the valves 30', 32' includes a fixture 36' at one end having a pair of longitudinally aligned valve passages 30'-1, 30'-2, 32'-1, 32'-2. The valves 30', 32' may be 2-way pneumatic valves from Asco Valve, Inc., 160 Park Avenue, Florham Park, NJ, 07932 which are in the normally closed position (i.e., so fluid cannot pass between the passage 30'-1 to passage 30'-2 of valve 30' or between passage 32'-1 to passage 32'-2 of valve 32') until energized or actuated, causing the valve to open (i.e., so that fluid may pass between the respective passages 30'-1 to 30'-2 of valve 30' or between respective passage 32'-1 to 32'-2 of valve 32'). The upper end of each fixture 36' also includes alignment holes 37' for alignment with the pegs 38' (FIG. 16 of the example not covered by the present invention) on the underside of the top cover 14' to ensure proper alignment of the valve passages with the corresponding openings of each of the ports 52', 54', 56' in the top cover 14'. A gasket 47' is disposed over the valve passages 30'-1, 30'-2, 32'-1, 32'-2 and seats within the recesses 39' (FIG. 16 of the example not covered by the present invention) in the underside of the top cover 14' surrounding each opening associated with each of the ports 52', 54', 56' thereby providing an airtight seal between the valve passages and the aligned port openings.

In the described example not covered by the present invention, referring to to FIGs. 11 and 15-16, in the down circuit 50', the valve passage 30'-1 of the fluid supply valve 30' aligns with the opening 52'-1 at the bottom of the first fluid inlet port 52'. The other valve passage 30'-2 of the fluid supply valve 30' aligns with the first opening 56'-1 of the first fluid outlet port 56'. The valve passage 32'-1 of the fluid exhaust valve 32' aligns with the second opening 56'-2 of the fluid outlet port 56'. The other valve passage 32'-2 of the fluid exhaust valve 32' aligns with the opening 54'-1 of the exhaust port 54'.

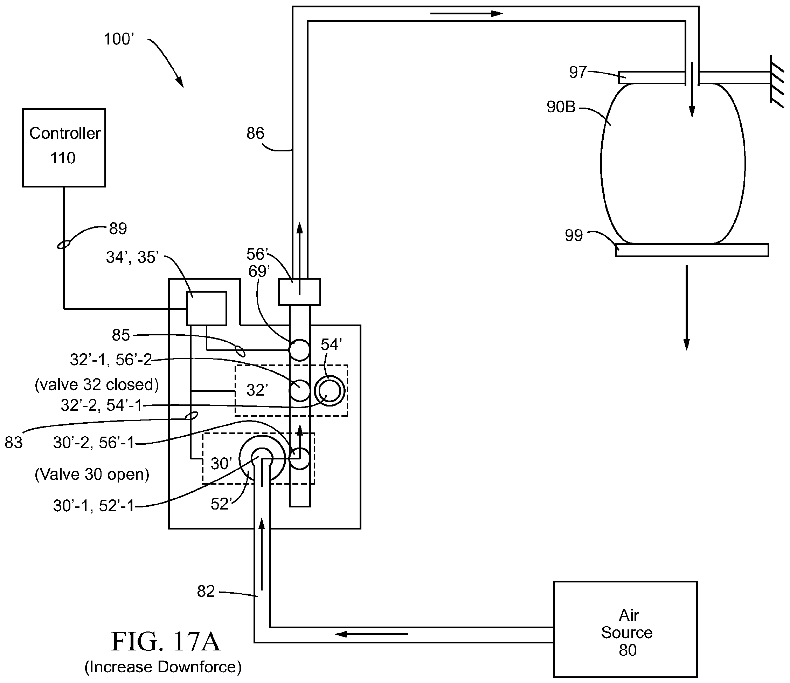

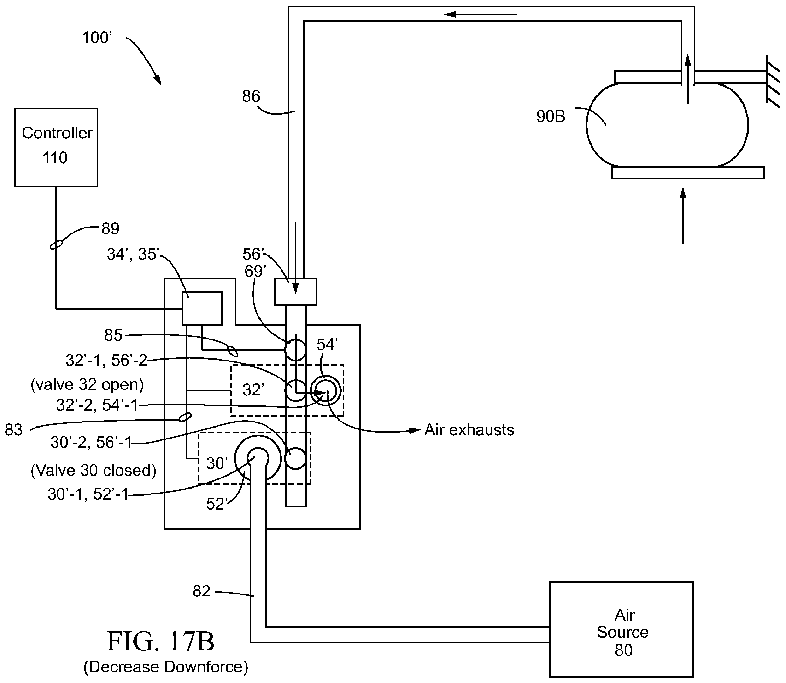

The operation of the fluid control assembly 10' is similar to the operation described above in connection with fluid control assembly 10 (except there is no lift circuit), and therefore only one example of the fluid control system 100' is described below and schematically illustrated in an example not covered by the present invention of FIGs. 17A-17B. The fluid system 100' comprises the fluid control assembly 10' in communication with a fluid source 80 and one or more pneumatic actuators 90 (90A, 90B). The fluid source 80 may be a fluid tank with a compressor or other suitable fluid source under pressure. The pneumatic actuator 90 (90A, 90B) may be a fluid cylinder or a fluid bag. In the described example not covered by the present invention of FIGs. 17-17B, the pneumatic actuator 90 (90A, 90B) is schematically illustrated as an airbag 90B, which has only a single chamber. One end of the airbag 90B is mounted to the fixed or stationary bracket 97. The other end of the airbag 90B is secured to the movable arm 99. In the described example not covered by the present invention, comparing FIGs. 17A and 17B, it can be seen that when the fluid bag is expanded (FIG. 17A of the described example not covered by the present invention) the expansion of the airbag forces the movable arm downwardly. When the airbag collapses or compresses (FIG. 17B of the described example not covered by the present invention), the movable arm 99 moves upwardly. As previously described, the circuit board 18' includes an electrical trace or signal path 83 between the communication port 34'/connector 35' and each of the valves 30, 32 for signal communication therebetween. The circuit board 18' also includes electrical traces 85 between the communication port 34'/connector 35' and the down pressure sensor 69' for signal communication therebetween. In some embodiments, all processing of signals for control of the valves 30', 32' may be performed by a processor on the circuit board 18'. In other embodiments, a data/signal line 89 may connect a remote controller 110 to the communication port 34'/connector 35' for signal communication of the remote controller 110 with the pressure sensor 69 and valves 30, 32. In yet another alternative embodiment, a closed loop control may be used to control the pressure in the down circuit 50' to selected values set by an operator. In such an embodiment, the selected value may be a selected amount of pressure in the outlet port 56 or the selected value may be a predetermined position of the movable member 99 detected by a position sensor (not shown) disposed detect the position of the movable member 99.

In operation, referring to FIG. 17A of the described example not covered by the present invention, if the down pressure sensor 69' detects that the pressure in the down circuit actuator line 86 is below a predetermined or selected pressure, a signal is generated to open the fluid supply valve 30'. With the fluid supply valve 30' open, the pressurized fluid from the fluid source 80 passes through the supply line 82 and into the inlet port opening 52'-1 of the first valve passage 30'-1 and then into the opening 56'-1 of outlet 56' then out through the actuator line 86 into the airbag 90B, causing the airbag 90B to expand forcing movable arm 99 downwardly. When the down pressure sensor 69 detects that the pressure in the line 86 exceeds a predetermined or set pressure, a signal is generated to close the supply valve 30.

In the described example not covered by the present invention, as shown in FIG. 17B, if the down pressure sensor 69 detects that the down pressure in the actuator line 86 exceeds a predetermined or selected pressure, a signal is generated to open the exhaust valve 32' from its normally closed position. With the exhaust valve 32' open, fluid is permitted to exhaust from the airbag 90B through the actuator line 86, through outlet port 56-2 of outlet 56 then through passages 32-1 then through 32-2 of the exhaust valve 32 and then out through exhaust port opening 54-1 of the exhaust port 54 before venting to atmosphere. When the down pressure sensor 69' detects that the pressure in the down circuit actuator line 86 reaches the predetermined or set pressure, a signal is generated to close the exhaust valve 32.

Exemplary uses of the fluid control assembly 10' are for controlling fluid flow for actuating an actuator of any of the foregoing a supplement downforce assembly 300, a row cleaner 400 or a trench closing assembly 500 as described above.

Various embodiments of the present as defined in the appended claims have been described above for purposes of illustrating the details thereof and to enable one of ordinary skill in the art to make and use the invention. The details and features of the disclosed embodiments are not intended to be limiting, as many variations and modifications within the scope of the present invention as defined by the appended claims will be readily apparent to those of skill in the art.

## Claims

1. A fluid system (100B) for controlling an agricultural operation, comprising:
a fluid control assembly (10), wherein the fluid is a gas;
a controller (110); and
an actuator (90B) configured to exert a force on an agricultural tool (300, 400, 500),
the fluid control assembly (10) comprising:
a first supply valve (30) having a first supply valve inlet (30-1) and a first supply valve outlet (30-2), the first supply valve (30) being in a normally closed position in which fluid is unable to pass between the first supply valve inlet (30-1) and the first supply valve outlet (30-2) until the first supply valve (30) is actuated to an open position in which fluid is able to pass between the first supply valve inlet (30-1) and the first supply valve outlet (30-2);
a first exhaust valve (32) having a first exhaust valve inlet (32-1) and a first exhaust valve outlet (32-2), the first exhaust valve (32) being in a normally closed position in which fluid is unable to pass between the first exhaust valve inlet (32-1) and the first exhaust valve outlet (32-2) until the first exhaust valve (32) is actuated to an open position in which fluid is able to pass between the first exhaust valve inlet (32-1) and the first exhaust valve outlet (32-2);
a housing (12) in which the first supply valve (30) and the first exhaust valve (32) are received, the housing (12) defining:
a first supply port (52) having a first supply passage (52-1) in fluid communication with the first supply valve inlet (30-1);
a first outlet port (56) having a first outlet passage (56-1) in fluid communication with the first supply valve outlet (30-2), the first outlet port (56) having a second outlet passage (56-2) in fluid communication with the first exhaust valve inlet (32-1);
a first exhaust port (54) having a first exhaust passage (54-1) in fluid communication with the first exhaust valve outlet (32-2);
a first pressure sensor port (68) in fluid communication with the first outlet port (56),
wherein the first supply valve (30), the first exhaust valve (32), the first supply port (52), the first outlet port (56), the first exhaust port (54) and the first pressure sensor port (68) comprise a down circuit portion (50) of the fluid control assembly (10), and wherein the fluid control assembly (10) further includes a lift circuit portion (60), the lift circuit portion (60) comprising:
a second supply valve (31) having a second supply valve inlet (31-1) and a second supply valve outlet (31-2), the second supply valve (31) being in a normally closed position in which fluid is unable to pass between the second supply valve inlet (31-1) and the second supply valve outlet (31-2) until the second supply valve (31) is actuated to an open position in which fluid is able to pass between the second supply valve inlet (31-1) and the second supply valve outlet (31-2);
a second exhaust valve (33) having a second exhaust valve inlet (33-1) and a second exhaust valve outlet (33-2), the second exhaust valve (33) being in a normally closed position in which fluid is unable to pass between the second exhaust valve inlet (33-1) and the second exhaust valve outlet (33-2) until the second exhaust valve (33) is actuated to an open position in which fluid is able to pass between the second exhaust valve inlet (33-1) and the second exhaust valve outlet (33-2);
wherein the housing (12) receives the second supply valve (31) and the second exhaust valve (33), the housing (12) further defining:
a second supply port (62) having a second supply passage (62-1) in fluid communication with the second supply valve inlet (31-1);
a second outlet port (66) having a third outlet passage (66-2) in fluid communication with the second supply valve outlet (31-2), the second outlet port (66) having a fourth outlet passage (66-1) in fluid communication with the second exhaust valve inlet (33-1);
a second exhaust port (64) having a second exhaust passage (64-4) in fluid communication with the second exhaust valve outlet (33-2);
a second pressure sensor port (70) in fluid communication with the second outlet port (66),
wherein the controller (110) is in signal communication with the first supply valve (30), the first exhaust valve (32), the second supply valve (31) and the second exhaust valve (33),
the fluid system (100B) further comprising:
a first fluid supply line (82) fluidly connecting the first supply port (52) to a fluid source (80);
a second fluid supply line (84) fluidly connecting the second supply port (62) to the fluid source (80);
a first actuator line (86) fluidly connecting the actuator (90B) to the first outlet port (56);
a second actuator line (88) fluidly connecting the actuator (90B) to the second outlet port (66);
a first pressure sensor (69) in fluid communication with the first pressure sensor port (68), the first pressure sensor (69) in signal communication with the controller (110);
a second pressure sensor (71) in fluid communication with the second pressure sensor port (70), the second pressure sensor (71) in signal communication with the controller (110),
**characterized in that** the actuator (90B) is an airbag
and wherein the fluid system is configured such that:
when the first pressure sensor (69) detects a pressure in the first actuator line (86) being less than a predetermined pressure, the controller (110) is configured to generate a signal to cause the first supply valve (30) to actuate to the open position and to cause the second supply valve (31) to actuate to the open position, whereupon fluid flows from the fluid source (80) via the first fluid supply line (82) through the open first supply valve (30) and to the airbag (90B) via the first actuator line (86) connecting the first outlet port (56) to the airbag (90B) and fluid flows from the fluid source (80) via the second fluid supply line (84) through the open second supply valve (31) to the airbag (90B) via the second actuator line (88) connecting the second outlet port (66) to the airbag (90B), all while the first exhaust valve (32) and the second exhaust valve (33) are in the normally closed position.

2. The fluid system (100B) of claim 1, wherein the agricultural tool is a downforce assembly (300).

3. The fluid system (100B) of claim 1, wherein the agricultural tool is a row cleaner (400).

4. The fluid system (100B) of claim 1, wherein the agricultural tool is a trench closing assembly (500).

5. The fluid system (100B) of any of claims 1-4, wherein the fluid system is configured such that:
when the first pressure sensor (69) detects a pressure in the first actuator line (86) being greater than a further predetermined pressure, the controller (110) is configured to generate a signal to cause the first exhaust valve (32) to actuate to the open position and to cause the second exhaust valve (33) to actuate to the open position, whereupon fluid flows from the airbag (90B) via the first actuator line (86) connecting the airbag (90B) to the first outlet port (56) and through the open first exhaust valve (32) exhausting the fluid from the first exhaust port (54) and via the second actuator line (88) connecting the airbag (90B) to the second outlet port (66) and through the open second exhaust valve (33) exhausting the fluid from the second exhaust port (64).

## Patentansprüche

1. Fluidsystem (100B) zum Steuern eines landwirtschaftlichen Arbeitsvorgangs, mit:
einer Fluidsteuerbaugruppe (10), wobei das Fluid ein Gas ist;
einem Controller (110); und
einem Aktuator (90B), der so konfiguriert ist, dass dieser eine Kraft auf ein landwirtschaftliches Werkzeug (300, 400, 500) ausübt,
wobei die Fluidsteuerbaugruppe (10) aufweist:
ein erstes Versorgungsventil (30) mit einem ersten Versorgungsventileingang (30-1) und einem ersten Versorgungsventilausgang (30-2), wobei das erste Versorgungsventil (30) normalerweise in einer geschlossenen Stellung ist, in der Fluid nicht zwischen dem ersten Versorgungsventileingang (30-1) und dem ersten Versorgungsventilausgang (30-2) hindurchtreten oder strömen kann, bis das erste Versorgungsventil (30) in eine offene Stellung betätigt wird, in der Fluid in der Lage ist, zwischen dem ersten Versorgungsventileingang (30-1) und dem ersten Versorgungsventilausgang (30-2) hindurchzutreten oder zu strömen;
ein erstes Auslassventil (32) mit einem ersten Auslassventileingang (32-1) und einem ersten Auslassventilausgang (32-2), wobei das erste Auslassventil (32) normalerweise in einer geschlossenen Stellung ist, in der Fluid nicht in der Lage ist, zwischen dem ersten Auslassventileingang (32-1) und dem ersten Auslassventilausgang (32-2) hindurchzutreten oder zu strömen, bis das erste Auslassventil (32) in eine offene Stellung betätigt wird, in der Fluid in der Lage ist, zwischen dem ersten Auslassventileingang (32-1) und dem ersten Auslassventilausgang (32-2) hindurchzutreten oder zu strömen;
ein Gehäuse (12), in dem das erste Versorgungsventil (30) und das erste Auslassventil (32) aufgenommen sind, wobei das Gehäuse (12) definiert oder aufweist:
einen ersten Versorgungsanschluss (52) mit einem ersten Versorgungskanal (52-1), der fluidisch mit dem ersten Versorgungsventileingang (30-1) kommuniziert;
einen ersten Ausgangsanschluss (56) mit einem ersten Ausgangskanal (56-1), der fluidisch mit dem ersten Versorgungsventilausgang (30-2) kommuniziert, wobei der erste Ausgangsanschluss (56) einen zweiten Ausgangskanal (56-2) aufweist, der fluidisch mit dem ersten Auslassventileingang (32-1) kommuniziert;
einen ersten Auslassanschluss (54) mit einem ersten Auslasskanal (54-1), der fluidisch mit dem ersten Auslassventilausgang (32-2) kommuniziert;
einen ersten Drucksensoranschluss (68), der fluidisch mit dem ersten Ausgangsanschluss (56) kommuniziert,
wobei das erste Versorgungsventil (30), das erste Auslassventil (32), der erste Versorgungsanschluss (52), der erste Ausgangsanschluss (56), der erste Auslassanschluss (54) und der erste Drucksensoranschluss (68) einen Abwärts-Kreisabschnitt (50) der Fluidsteuerbaugruppe aufweisen, und wobei die Fluidsteuerbaugruppe des Weiteren einen Aufwärts-Kreisabschnitt (60) aufweist und der Aufwärts-Kreisabschnitt (60) aufweist:
ein zweites Versorgungsventil (31) mit einem zweiten Versorgungsventileingang (31-1) und einem zweiten Versorgungsventilausgang (31-2), wobei sich das zweite Versorgungsventil (31) normalerweise in einer geschlossenen Stellung befindet, in welcher Fluid nicht in der Lage ist, zwischen dem zweiten Versorgungsventileingang (31-1) und dem zweiten Versorgungsventilausgang (31-2) hindurchzutreten oder zu strömen, bis das zweite Versorgungsventil (31) in eine offene Stellung bestätigt wird, in der Fluid in der Lage ist, zwischen dem zweiten Versorgungsventileingang (31-1) und dem zweiten Versorgungsventilausgang (31-2) hindurchzutreten oder zu strömen;
ein zweites Auslassventil (33) mit einem zweiten Auslassventileingang (33-1) und einem zweiten Auslassventilausgang (33-2), wobei sich das zweite Auslassventil (33) normalerweise in einer geschlossenen Stellung befindet, in der Fluid nicht in der Lage ist, zwischen dem zweiten Auslassventileingang (33-1) und dem zweiten Auslassventilausgang (33-2) hindurchzutreten oder zu strömen, bis das zweite Auslassventil (33) in eine offene Stellung betätigt wird, in der Fluid in der Lage ist, zwischen dem zweiten Auslassventileingang (33-1) und dem zweiten Auslassventilausgang (33-2) hindurchzutreten oder zu strömen;
wobei das Gehäuse (12) das zweite Versorgungsventil (31) und das zweite Auslassventil (33) aufnimmt, wobei das Gehäuse (12) des Weiteren definiert oder aufweist:
einen zweiten Versorgungsanschluss (62), der einen zweiten Versorgungskanal (62-1) aufweist, der fluidisch mit dem zweiten Versorgungsventileingang (31-1) kommuniziert;
einen zweiten Ausgangsanschluss (66), der einen dritten Ausgangskanal (66-2) aufweist, der fluidisch mit dem zweiten Versorgungsventilausgang (32-2) kommuniziert, wobei der zweite Ausgangsanschluss (66) einen vierten Ausgangskanal (66-1) aufweist, der fluidisch mit dem zweiten Auslassventileingang (33-1) kommuniziert;
einen zweiten Auslassanschluss (64), der einen zweiten Auslasskanal (64-4) aufweist, der fluidisch mit dem zweiten Auslassventilausgang (33-2) kommuniziert;
einen zweiten Drucksensoranschluss (70), der fluidisch mit dem zweiten Ausgangsanschluss (66) kommuniziert,
wobei der Controller (110) in Signalkommunikation mit dem ersten Versorgungsventil (30), dem ersten Auslassventil (32), dem zweiten Versorgungsventil (31) und dem zweiten Auslassventil (33) steht,
wobei das Fluidsystem (100B) des Weiteren aufweist:
eine erste Fluidversorgungsleitung (82), die fluidisch den ersten Versorgungsanschluss (52) mit einer Fluidquelle (80) verbindet;
eine zweite Fluidversorgungsleitung (84), die fluidisch den zweiten Versorgungsanschluss (62) mit der Fluidquelle (80) verbindet;
ein erste Aktuatorleitung (86), die fluidisch den Aktuator (90B) mit dem ersten Ausgangsanschluss (56) verbindet;
eine zweite Aktuatorleitung (88), die fluidisch den Aktuator (90B) mit dem zweiten Ausgangsanschluss (66) verbindet;
einen ersten Drucksensor (69), der fluidisch mit dem ersten Drucksensoranschluss (68) kommuniziert, wobei der erste Drucksensor (69) in Signalkommunikation mit dem Controller (110) steht;
einen zweiten Drucksensor (71), der fluidisch mit dem zweiten Drucksensoranschluss (70) kommuniziert, wobei der zweite Drucksensor (71) in Signalkommunikation mit dem Controller (110) steht,
**dadurch gekennzeichnet, dass** der Aktuator (90B) ein Luftbalg ist, wobei das Fluidsystem derart konfiguriert ist, dass:
dann, wenn der erste Drucksensor (69) einen Druck in der ersten Aktuatorleitung (86) detektiert, der kleiner ist als ein vorgegebener Druck, der Controller (110) so konfiguriert ist, dass dieser ein Signal erzeugt zur Verursachung, dass das erste Versorgungsventil (30) in die offene Stellung betätigt wird, und zur Verursachung, dass das zweite Versorgungsventil (31) in die offene Stellung betätigt wird, womit Fluid von der Fluidquelle (80) über die erste Fluidversorgungsleitung (82) durch das offene erste Versorgungsventil (30) und zu dem Luftbalg (90B) über die erste Aktuatorleitung (86), die den ersten Ausgangsanschluss (56) mit dem Luftbalg (90B) verbindet, strömt, und Fluid von der Fluidquelle (80) über die zweite Fluidversorgungsleitung (84) durch das offene zweite Versorgungsventil (31) zu dem Luftbalg (90B) über die zweite Aktuatorleitung (88), die den zweiten Ausgangsanschluss (66) mit dem Luftbalg (90B) verbindet, strömt, während sich das erste Auslassventil (32) und das zweite Auslassventil (33) in ihrer normalerweise geschlossenen Stellung befinden.

2. Fluidsystem (100B) nach Anspruch 1, wobei das landwirtschaftliche Werkzeug eine Baugruppe (30) ist, die eine nach unten gerichtete Kraft erzeugt.

3. Fluidsystem (100B) nach Anspruch 1, wobei das landwirtschaftliche Werkzeug ein Reihenreiniger (400) ist.

4. Fluidsystem (100B) nach Anspruch 1, wobei das landwirtschaftliche Werkzeug eine Furchenschließbaugruppe (500) ist.

5. Fluidsystem (100B) nach einem der Ansprüche 1 bis 4, wobei das Fluidsystem so konfiguriert ist, dass:
dann, wenn der erste Drucksensor (69) einen Druck in der ersten Aktuatorleitung (86) detektiert, der größer ist als ein weiterer vorgegebener Druck, der Controller (110) so konfiguriert ist, dass dieser ein Signal erzeugt um zu verursachen, dass das erste Auslassventil (32) in die offene Stellung betätigt wird, und um zu verursachen, dass das zweite Auslassventil (33) in die offene Stellung betätigt wird, womit Fluid von dem Luftbalg (90B) über die erste Aktuatorleitung (86), die den Luftbalg (90B) mit dem ersten Ausgangsanschluss (56) verbindet, und durch das offene erste Auslassventil (32) strömt, womit Fluid von dem ersten Auslassanschluss (54) und über die zweite Aktuatorleitung (88), die den Luftbalg (90B) mit dem zweiten Ausgangsanschluss (66) verbindet, und durch das offene zweite Auslassventil (33) ausströmt, womit das Fluid aus dem zweiten Auslassanschluss (64) abgegeben wird.

## Revendications

1. Dispositif fluidique (100B) destiné à commander une opération agricole, comprenant :
un ensemble de commande fluidique (10), dans lequel le fluide est un gaz ;
une unité de commande (110) ; et
un actionneur (90B) configuré de manière à exercer un effort sur un outil agricole (300, 400, 500),
l'ensemble de commande fluidique (10) comprenant :
une première vanne d'alimentation (30) comportant un premier orifice d'entrée de vanne d'alimentation (30-1) et un premier orifice de sortie de vanne d'alimentation (30-2), la première vanne d'alimentation (30) étant dans une position normalement fermée dans laquelle un fluide ne peut pas passer entre le premier orifice d'entrée de vanne d'alimentation (30-1) et le premier orifice de sortie de vanne d'alimentation (30-2) tant que la première vanne d'alimentation (30) n'est pas activée dans une position ouverte dans laquelle un fluide peut passer entre le premier orifice d'entrée de vanne d'alimentation (30-1) et le premier orifice de sortie de vanne d'alimentation (30-2) ;
une première vanne d'évacuation (32) comportant un premier orifice d'entrée de vanne d'évacuation (32-1) et un premier orifice de sortie de vanne d'évacuation (32-2), la première vanne d'évacuation (32) étant dans une position normalement fermée dans laquelle un fluide ne peut pas passer entre le premier orifice d'entrée de vanne d'évacuation (32-1) et le premier orifice de sortie de vanne d'évacuation (32-2) tant que la première vanne d'évacuation (32) n'est pas activée dans une position ouverte dans laquelle le fluide peut passer entre le premier orifice d'entrée de vanne d'évacuation (32-1) et le premier orifice de sortie de vanne d'évacuation (32-2) ;
un logement (12) dans lequel la première vanne d'alimentation (30) et la première vanne d'évacuation (32) sont reçues, le logement (12) définissant :
un premier orifice d'alimentation (52) comportant un premier passage d'alimentation (52-1) en communication fluidique avec le premier orifice d'entrée de vanne d'alimentation (30-1) ;
un premier orifice de sortie (56) comportant un premier passage de sortie (56-1) en communication fluidique avec le premier orifice de sortie de vanne d'alimentation (30-2), le premier orifice de sortie (56) comportant un deuxième passage de sortie (56-2) en communication fluidique avec le premier orifice d'entrée de vanne d'évacuation (32-1) ;
un premier orifice d'évacuation (54) comportant un premier passage d'évacuation (54-1) en communication fluidique avec le premier orifice de sortie de vanne d'évacuation (32-2) ;
un premier orifice de capteur de pression (68) en communication fluidique avec le premier orifice de sortie (56),
dans lequel la première vanne d'alimentation (30), la première vanne d'évacuation (32), le premier orifice d'alimentation (52), le premier orifice de sortie (56), le premier orifice d'évacuation (54) et le premier orifice de capteur de pression (68) constituent une partie de circuit de descente (50) de l'ensemble de commande fluidique (10) et dans lequel l'ensemble de commande fluidique (10) comporte, en outre, une partie de circuit de montée (60), la partie de circuit de montée (60) comprenant :
une seconde vanne d'alimentation (31) comportant un second orifice d'entrée de vanne d'alimentation (31-1) et un second orifice de sortie de vanne d'alimentation (31-2), la seconde vanne d'alimentation (31) étant dans une position normalement fermée dans laquelle un fluide ne peut pas passer entre le second orifice d'entrée de vanne d'alimentation (31-1) et le second orifice de sortie de vanne d'alimentation (31-2) tant que la seconde vanne d'alimentation (31) n'est pas activée dans une position ouverte dans laquelle le fluide peut passer entre le second orifice d'entrée de vanne d'alimentation (31-1) et le second orifice de sortie de vanne d'alimentation (31-2) ;
une seconde vanne d'évacuation (33) comportant une seconde entrée de vanne d'évacuation (33-1) et un second orifice de sortie de vanne d'évacuation (33-2), la seconde vanne d'évacuation (33) étant dans une position normalement fermée dans laquelle le fluide ne peut pas passer entre la seconde entrée de vanne d'évacuation (33-1) et le second orifice de sortie de vanne d'évacuation (33-2) tant que la seconde vanne d'évacuation (33) n'est pas activée dans une position ouverte dans laquelle le fluide peut passer entre la seconde entrée de vanne d'évacuation (33-1) et le second orifice de sortie de vanne d'évacuation (33-2) ;
dans lequel le logement (12) reçoit la seconde vanne d'alimentation (31) et la seconde vanne d'évacuation (33), le logement (12) définissant, en outre :
un second orifice d'alimentation (62) comportant un deuxième passage d'alimentation (62-1) en communication fluidique avec le second orifice d'entrée de vanne d'alimentation (31-1) ;
un second orifice de sortie (66) comportant un troisième passage de sortie (66-2) en communication fluidique avec le second orifice de sortie de vanne d'alimentation (31-2), le second orifice de sortie (66) comportant un quatrième passage de sortie (66-1) en communication fluidique avec la seconde entrée de vanne d'évacuation (33-1) ;
un second orifice d'évacuation (64) comportant un deuxième passage d'évacuation (64-4) en communication fluidique avec le second orifice de sortie de vanne d'évacuation (33-2) ;
un second orifice de capteur de pression (70) en communication fluidique avec le second orifice de sortie (66),
dans lequel l'unité de commande (110) est en communication de signal avec la première vanne d'alimentation (30), la première vanne d'évacuation (32), la seconde vanne d'alimentation (31) et la seconde vanne d'évacuation (33),
le dispositif fluidique (100B) comprenant, en outre :
une première ligne d'alimentation en fluide (82) reliant de manière fluidique le premier orifice d'alimentation (52) à une source de fluide (80) ;
une seconde ligne d'alimentation en fluide (84) reliant de manière fluidique le second orifice d'alimentation (62) à la source de fluide (80) ;
une première ligne d'actionneur (86) reliant de manière fluidique l'actionneur (90B) au premier orifice de sortie (56) ;
une seconde ligne d'actionneur (88) reliant de manière fluidique l'actionneur (90B) au second orifice de sortie (66) ;
un premier capteur de pression (69) en communication fluidique avec le premier orifice de capteur de pression (68), le premier capteur de pression (69) étant en communication de signal avec l'unité de commande (110) ;
un second capteur de pression (71) en communication fluidique avec le second orifice de capteur de pression (70), le second capteur de pression (71) étant en communication de signal avec l'unité de commande (110),
**caractérisé en ce que** l'actionneur (90B) est un coussin pneumatique et dans lequel le dispositif fluidique est configuré de telle sorte que :
lorsque le premier capteur de pression (69) détecte, dans la première ligne d'actionneur (86), une pression qui est inférieure à une pression prédéterminée, l'unité de commande (110) est configurée de manière à produire un signal destiné à activer la première vanne d'alimentation (30) dans la position ouverte et à activer la seconde vanne d'alimentation (31) dans la position ouverte, de telle sorte qu'un fluide s'écoule à partir de la source de fluide (80) par l'intermédiaire de la première ligne d'alimentation en fluide (82) à travers la première vanne ouverte d'alimentation (30) et dans le coussin pneumatique (90B) par l'intermédiaire de la première ligne d'actionneur (86) raccordant le premier orifice de sortie (56) au coussin pneumatique (90B) et le fluide s'écoule à partir de la source de fluide (80) par l'intermédiaire de la seconde ligne d'alimentation en fluide (84) à travers la seconde vanne d'alimentation (31) ouverte dans le coussin pneumatique (90B) par l'intermédiaire de la seconde ligne d'actionneur (88) raccordant le second orifice de sortie (66) au coussin pneumatique (90B), cela alors que la première vanne d'évacuation (32) et la seconde vanne d'évacuation (33) sont dans la position normalement fermée.

2. Dispositif fluidique (100B) selon la revendication 1, dans lequel l'outil agricole est un ensemble d'application d'effort au sol (300).

3. Dispositif fluidique (100B) selon la revendication 1, dans lequel l'outil agricole est un dispositif de nettoyage de rangée (400).

4. Dispositif fluidique (100B) selon la revendication 1, dans lequel l'outil agricole est un ensemble de fermeture de tranchée (500).

5. Dispositif fluidique (100B) selon l'une quelconque des revendications 1 à 4, dans lequel le dispositif fluidique est configuré de telle sorte que :
lorsque le premier capteur de pression (69) détecte, dans la première ligne d'actionneur (86), une pression qui est supérieure à une pression prédéterminée, l'unité de commande (110) est configurée de manière à produire un signal destiné à activer la première vanne d'évacuation (32) dans la position ouverte et à activer la seconde vanne d'évacuation (33) dans la position ouverte, de telle sorte que le fluide s'écoule à partir du coussin pneumatique (90B) par l'intermédiaire de la première ligne d'actionneur (86) raccordant le coussin pneumatique (90B) au premier orifice de sortie (56) et à travers la première vanne d'évacuation (32) ouverte, évacuant le fluide à partir du premier orifice d'évacuation (54) et par l'intermédiaire de la seconde ligne d'actionneur (88) raccordant le coussin pneumatique (90B) au second orifice de sortie (66) et à travers la seconde vanne d'évacuation ouverte (33) évacuant le fluide à partir du second orifice d'évacuation (64).
